(19) Europäisches Patentamt
European Patent Office
Office européen des brevets

(11) **EP 3 147 154 B1**

(12) **EUROPEAN PATENT SPECIFICATION**

(45) Date of publication and mention
of the grant of the patent:
**12.12.2018 Bulletin 2018/50**

(21) Application number: **16188592.6**

(22) Date of filing: **13.09.2016**

(51) Int Cl.:
*B60L 11/02* (2006.01)   *B60W 10/08* (2006.01)
*B60W 20/10* (2016.01)   *B60L 15/20* (2006.01)
*B60W 30/18* (2012.01)

(54) **CONTROL DEVICE OF ELECTRIC VEHICLE**

STEUERUNGSVORRICHTUNG EINES ELEKTROFAHRZEUGS

DISPOSITIF DE CONTRÔLE POUR VÉHICULE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2015 JP 2015188383**

(43) Date of publication of application:
**29.03.2017 Bulletin 2017/13**

(73) Proprietor: **AISIN SEIKI KABUSHIKI KAISHA
Kariya-shi, Aichi 448-8650 (JP)**

(72) Inventor: **KAKISAKO, Hideki
Kariya-shi, Aichi 448-8650 (JP)**

(74) Representative: **Kramer Barske Schmidtchen
Patentanwälte PartG mbB
European Patent Attorneys
Landsberger Strasse 300
80687 München (DE)**

(56) References cited:
**US-A1- 2012 182 004    US-A1- 2013 197 733
US-A1- 2013 296 112    US-A1- 2014 379 186**

## Description

TECHNICAL FIELD

This disclosure relates to a control device of an electric vehicle that is capable of switching a plurality of traveling modes including a motor traveling mode and, more particularly, to a control when the electric vehicle stops on an uphill road in the motor traveling mode.

BACKGROUND DISCUSSION

In a hybrid vehicle including an engine and a motor as drive sources, in general, a plurality of traveling modes are used, and comfortable driving operation and good fuel economy are ensured. Typically, a motor traveling mode in which only the motor is a drive source is often used in low-speed traveling and an engine traveling mode is often used in high-speed traveling. In addition, driving forces of the engine and the motor are summed, for example, on a steep uphill road in a hybrid traveling mode in which the engine and the motor are the drive sources. Furthermore, in the hybrid vehicle, the motor is used as a generator during braking and a battery is charged by performing regenerative electric power generation. Switching control of the traveling modes and the like described above are automatically performed by a control device of an electronic-type hybrid vehicle.

When temporarily stopping the hybrid vehicle on the uphill road, a driver, who desires a rapid start, operates an accelerator pedal without operating a brake pedal and stops the vehicle by the driving force by the motor traveling mode. In this case, a balanced driving force is output from the motor and a stop state is maintained against a sliding-down force that causes the hybrid vehicle to be slid down on the uphill road. In addition, since the motor outputs the driving force without rotating, an electrical input is mostly converted into thermal energy and thereby a temperature is steeply increased. When stopping the vehicle on the uphill road in the motor traveling mode, a technical example for estimating a temperature rise of the motor is disclosed in JP2015-6854A (Reference 1. A family member document US 2014/379186 discloses a hill holding technique using the motor of the vehicle having a temperature sensor and calculates the rate of change of temperature and linearly project and estimate the length of time before the temperature goes above a threshold and when this occurs, switch driving mode.

An electronic control device disclosed in Reference 1 includes means for determining whether or not the hybrid vehicle is in the stop state on the uphill (uphill road) in the motor traveling mode, means for estimating a margin time until a temperature of the motor reaches an upper limit temperature based on an obtained physical quantity, and means for switching a mode from the motor traveling mode to a traveling mode using at least the engine in a case where the margin time reaches a predetermined time that is set in advance. Therefore, the margin time until the temperature of the motor reaches the upper limit temperature is estimated and the engine is driven before the driving force of the motor is restricted, thereby improving the fuel economy while suppressing sliding-down of the vehicle on the uphill road.

However, in the technique disclosed in Reference 1, a temperature rise quantity per unit time is obtained based on an instantaneous temperature obtained by a sensor and the margin time is calculated as the temperature rise continues linearly. Therefore, even in a case where the temperature rise of the motor actually indicates saturation tendency and does not exceed the upper limit temperature, the engine is driven and it causes a disadvantage that the fuel economy is reduced. Furthermore, in the technique disclosed in JP2015-6854A or US2014/379186 whether or not the vehicle is stopped on the uphill road in the motor traveling mode is determined based on only the temperature of the motor. Therefore, some measures are required to prevent an inverter from reaching a high temperature.

Moreover, such a problem described above is not limited to the hybrid vehicle and is common in an electric vehicle having the plurality of traveling modes. That is, such a problem described above is common in an electric vehicle that switches the number of driving of a plurality of motors, an electric motor that adjusts a driving force by switching gear stages, including a transmission on an output side of the motor.

SUMMARY

Thus, a need exists for a control device of an electric vehicle in which stop of a vehicle is realized on an uphill road by a motor traveling mode while preventing a high temperature of a motor or an inverter.

An aspect of this disclosure is directed to a control device of an electric vehicle which includes a motor that rotationally drives driving wheels, an inverter that adjusts a driving force output by controlling a current flowing through the motor, and a control device that performs controlling to stop the electric vehicle, which is capable of switching a plurality of traveling modes including a motor traveling mode of traveling by only the motor as a driving source, an engine traveling mode of traveling by only an engine as a driving source, and a hybrid traveling mode of traveling while enabling use of the driving forces of the engine and the motor together, on an uphill road in the motor traveling mode. The control device includes an information acquiring portion that acquires information involved in a switching control of the traveling modes of the electric vehicle and information on a gradient of the uphill road; a balanced driving force calculating portion that determines that the electric vehicle is stopped on the uphill road in the motor traveling mode based on acquired information and calculates a balanced driving force output from the motor against a sliding-down force that causes the electric vehicle to be slid down on the uphill road; a temperature change estimating portion that estimates a change of temperature of the motor and a change of temperature of the inverter based on a calculated balanced driving force, which corresponds to a heat generation quantity per unit time of the motor while the vehicle is stopped on the uphill road, and saturation characteristics of a temperature rise, wherein the temperature change estimating portion uses an estimation equation indicating the saturation characteristics and using estimated values of current temperatures of the motor and the inverter, and the balanced driving force, or a map of a table form in which the estimated values of the current temperatures of the motor and the inverter, and the balanced driving force are parameters; a time calculating portion that calculates a drivable time until the temperature of the motor reaches a motor-side upper limit allowable temperature and an energizable time until the temperature of the inverter reaches an inverter-side upper limit allowable temperature that are set based on the estimated change of temperature; and a mode switching portion that switches the motor traveling mode to another traveling mode of the plurality of traveling modes if a smaller one of the drivable time and the energizable time is equal to or less than a predetermined time, which is set to be equal to or greater than a switching duration time required for switching the motor traveling mode to the another traveling mode.

With this configuration, it is possible to estimate the changes of the temperatures of the motor and the inverter, and to calculate the drivable time and the energizable time based on the balanced driving force and the saturation characteristics of the temperature rise. Thus, it is possible to realize the stop of the vehicle on the uphill road by the motor traveling mode up to the limit of a predetermined time. In addition, when reaching the limit of the predetermined time, the motor traveling mode is switched to another traveling mode and the driving force of the motor is reduced. Therefore, since the heat generation quantity of the motor and the inverter is reduced, it is possible to prevent the high temperature thereof.

The control device of an electric vehicle according to the aspect of this disclosure may be configured such that the temperature change estimating portion estimates an instantaneous temperature of the motor that is changed together with an elapsed time and a saturation temperature of the motor after a long period of time is elapsed, and an instantaneous temperature of the inverter that is changed together with an elapsed time and a saturation temperature of the inverter after a long period of time is elapsed, and the time calculating portion calculates the drivable time based on at least one of the instantaneous temperature and the saturation temperature of the motor, and calculates the energizable time based on at least one of the instantaneous temperature and the saturation temperature of the inverter.

The control device of an electric vehicle according to the aspect of this disclosure may be configured such that the information involved in the switching control of the traveling mode of the electric vehicle includes at least one piece of information among a vehicle weight, a load weight, a tire diameter of the driving wheels, a physical quantity on the rolling resistance of the driving wheels, a temperature correlating to the current temperature of the motor, a temperature correlating to the current temperature of the inverter, a current traveling mode, and a current vehicle speed.

The control device of an electric vehicle according to the aspect of this disclosure may be configured such that the motor-side upper limit allowable temperature and the inverter-side upper limit allowable temperature are set in consideration of the temperature rises of the motor and the inverter corresponding to an increment of the driving force when the electric vehicle is started by maintaining the motor traveling mode.

The control device of an electric vehicle according to the aspect of this disclosure may be configured to further include a starting mode switching portion that causes the electric vehicle to be started by switching the motor traveling mode to another traveling mode in a case where the electric vehicle is assumed to be started by maintaining the motor traveling mode, the temperature rise corresponding to the increment of the driving force during start is generated in the motor and the inverter, and then there is a concern that the temperature of the motor exceeds the motor-side upper limit allowable temperature, or in a case where there is a concern that the temperature of the inverter exceeds the inverter-side upper limit allowable temperature.

The control device of an electric vehicle according to the aspect of this disclosure may be configured to further include: a temperature lowering estimating portion that estimates lowering of the temperature of the motor and lowering of the temperature of the inverter after the mode switching portion switches the motor traveling mode to the another traveling mode, and a motor traveling mode resuming portion that returns the another traveling mode to the motor traveling mode when an estimated temperature of the motor is lowered to be equal to or less than a motor-side resuming allowable temperature that is lower than the motor-side upper limit allowable temperature and an estimated temperature of the inverter is lowered to be equal to or less than an inverter-side resuming allowable temperature that is lower than the inverter-side upper limit allowable temperature.

BRIEF DESCRIPTION OF THE DRAWINGS

Fig. 1 is a view schematically illustrating an entire configuration of a driving device for a hybrid vehicle to which a control device of an electric vehicle of Embodiment 1 is applied;

Fig. 2 is a process flow chart describing a control process of the control device of the electric vehicle of Embodiment 1;

Fig. 3 is a graph illustrating an example in which a change of temperature of a motor is estimated in accordance with a balanced driving force;

Fig. 4 is a graph illustrating an example in which the change of the temperature of the inverter is estimated in accordance with the balanced driving force;

Fig. 5 is a diagram of a timing chart illustrating a case where a motor traveling mode is switched to another traveling mode;

Fig. 6 is a diagram of a timing chart illustrating control examples of the control device which are changed in accordance with a gradient angle of an uphill road;

Fig. 7 is a process flow chart describing a control operation of a control device of an electric vehicle of Embodiment 2; and

Fig. 8 is a process flow chart describing a control operation of a control device of an electric vehicle of Embodiment 3.

DETAILED DESCRIPTION

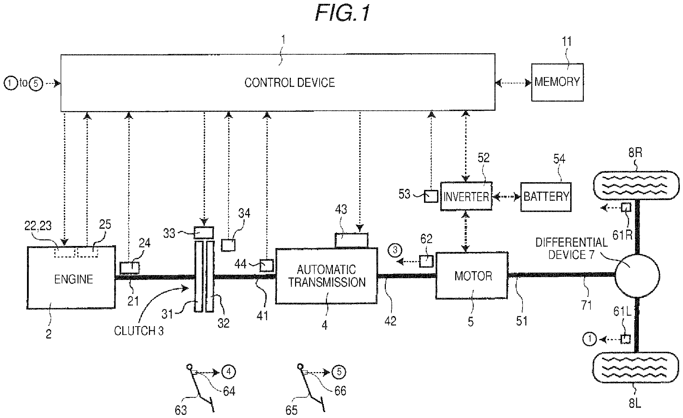

A control device 1 of an electric vehicle of Embodiment 1 of the disclosure will be described with reference to Figs. 1 to 6. As the electric vehicle, a hybrid vehicle including an engine 2 and a motor 5 as driving sources can be exemplified. An electric automobile including a main motor and an auxiliary motor as driving sources, an electric automobile that includes a motor and a transmission connected to a driving source in series, and switches a plurality of gear stages, and the like are included in the electric vehicle. Fig. 1 is a view schematically illustrating an entire configuration of a driving device for a hybrid vehicle to which the control device 1 of the electric vehicle of Embodiment 1 is applied. In Fig. 1, thick lines indicate a mechanical connection (transmission path of a driving force) between devices, broken arrows indicate flows of control signals and detection signals, one dotted dashed-line arrows indicate flows of electric power.

As illustrated in Fig. 1, a driving device for the hybrid vehicle is configured of the engine 2, a clutch 3, an automatic transmission 4, the motor 5, and a differential device 7 to be disposed in series in this order. An output side of the differential device 7 is branched and is rotationally connected to left and right driving wheels 8L and 8R. The control device 1 of the electric vehicle of the embodiment controls devices from the engine 2 to the motor 5. There is no restriction on the placement of the engine 2, the motor 5, and the driving wheels 8L and 8R, and the vehicle may be any of a FF vehicle, a FR vehicle, and RR vehicle. In addition, the vehicle may be the hybrid vehicle of a 4-wheel drive type obtained by modifying an output side after an output side of the motor 5.

The engine 2 outputs a driving force from an output shaft 21. The engine 2 is a gasoline engine or a diesel engine using hydrocarbon-based liquid fuel such as gasoline or diesel fuel, or a gas engine using hydrocarbon gas fuel such as natural gas or propane gas, and the like. The engine 2 has a throttle valve 22, a fuel injector 23, a rotational speed sensor 24, and a coolant temperature sensor 25, and the like in addition to the output shaft 21.

The clutch 3 causes an input-side member 31 and an output-side member 32 to be rotationally connected to be capable of connecting and disconnecting therebetween. The input-side member 31 is rotationally connected to the output shaft 21 of the engine 2. The output-side member 32 is rotationally connected to an input shaft 41 of the automatic transmission 4. The clutch 3 has an actuator 33 causing to be capable of connecting and disconnecting the input-side member 31 and the output-side member 32 by driving at least one of the input-side member 31 and the output-side member 32. The clutch 3 further has a stroke sensor 34 that measures a clutch stroke quantity.

The automatic transmission 4 switches a plurality of gear ratios between the input shaft 41 and an output shaft 42. As the automatic transmission 4, a planetary gear type automatic transmission or a two-axis parallel type automatic transmission can be exemplified, but the automatic transmission 4 is not limited to the examples. The automatic transmission 4 has an actuator 43 that performs switching operations of the gear ratios. The automatic transmission 4 further has a rotational speed sensor 44 in the vicinity of the input shaft 41.

The motor 5 outputs a driving force to the differential device 7 without going through the clutch 3. As the motor 5, a three-phase synchronous machine in which switching of a driving mode that outputs a driving force by an electrical input and an electric power mode that generates electric power by a driving force input is possible can be exemplified. The motor 5 is formed of a main shaft 51, a rotor, and a stator (not illustrated). The main shaft 51 is rotationally connected to the output shaft 42 of the automatic transmission 4 and is also rotationally connected to an input shaft 71 of the differential device 7. A rotor having a permanent magnet is integrally provided around the main shaft 51. On the other hand, a stator having a stator coil is fixed on a casing side.

An inverter 52 and a battery 54 are attached to the motor 5. The inverter 52 converts DC power supplied from the battery 54 into AC power and supplies AC power on the stator coil. Therefore, the motor 5 outputs a driving force from the main shaft 51. In addition, the driving force is input from the driving wheels 8L and 8R into the main shaft 51 and the motor 5 performs regenerative electric power generation during braking. Furthermore, the driving force is input from the engine 2 into the main shaft 51 and the motor 5 may perform electric power generation during traveling. The inverter 52 converts AC power output from the stator coil by electric power into DC power and supplies DC power on the battery 54. Therefore, the battery 54 is charged. When the inverter 52 is not functioned, the main shaft 51 acts as a simple transmission shaft. The inverter 52 is cooled by a cooling fluid and the cooling fluid temperature sensor 53 is provided.

The control device 1 controls the driving device of the hybrid vehicle. The control device 1 is an electronic control device that has a CPU and is operated by software. The control device 1 controls the throttle valve 22 and the fuel injector 23 of the engine 2, and receives detection signals from the rotational speed sensor 24 and the coolant temperature sensor 25. The control device 1 controls the actuator 33 of the clutch 3 and receives a detection signal from the stroke sensor 34. The control device 1 controls the actuator 43 of the automatic transmission 4 and receives a detection signal from the rotational speed sensor 44. The control device 1 controls a two-way electric power conversion function of the inverter 52 and receives a detection signal from the cooling fluid temperature sensor 53.

The control device 1 receives detection signals of left and right wheel speeds from left and right wheel speed sensors 61 L and 61R. In addition, the control device 1 receives a detection signal from a temperature sensor 62 detecting a temperature inside an engine room in which the motor 5 is equipped. Furthermore, the control device 1 receives each detection signal from each of a brake sensor 64 that detects an operation quantity of a brake pedal 63 and an accelerator sensor 66 that detects an operation quantity of an accelerator pedal 65.

In addition, some information involved in switching of the traveling mode of the hybrid vehicle is stored in a memory 11 attached to the control device 1. As such information, a vehicle weight WB, a tire diameter Dd of the driving wheels 8L and 8R, a physical quantity Rd on rolling resistance of the driving wheels 8L and 8R, and the like can be exemplified. The exemplified information is constant information that does not changed with time, but variable information may be included in the information involved in the switching control of the traveling mode.

The control device 1 performs the switching control of the traveling mode with respect to the control of the driving device of the hybrid vehicle. As the traveling modes, three types of a motor traveling mode, an engine traveling mode, and a hybrid traveling mode can be exemplified. In the motor traveling mode, the control device 1 stops the engine 2, cuts the clutch 3, and causes the vehicle to travel only by the driving force of the motor 5. In the engine traveling mode, the control device 1 rotates the engine 2, engages the clutch 3, stops the motor 5, and causes the vehicle to travel only by the driving force of the engine 2. In the hybrid traveling mode, the control device 1 rotates the engine 2, engages the clutch 3, also rotate the motor 5, and causes the vehicle to travel while enabling use of the driving forces of the engine 2 and the motor 5 together.

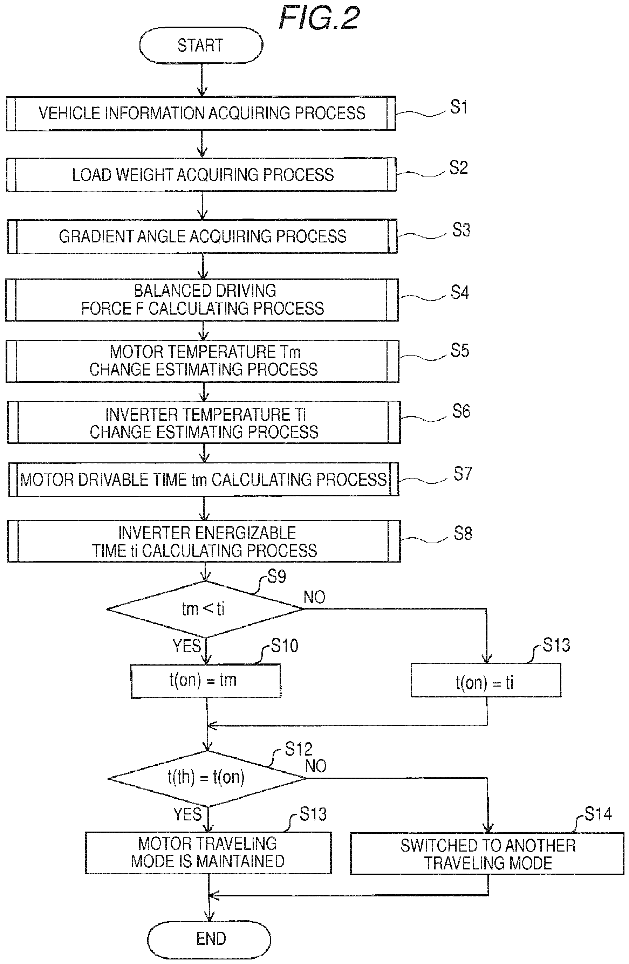

Next, the control operation of the control device 1 of the electric vehicle of Embodiment 1 will be described. The control device 1 performs controlling when the hybrid vehicle stops on the uphill road in the motor traveling mode. Specifically, the control device 1 performs temperature monitoring of the motor 5 and the inverter 52, and controls switching of the motor traveling mode if necessary. Fig. 2 is a process flow chart describing a control process of the control device 1 of the electric vehicle of Embodiment 1. The control device 1 repeatedly performs the process flow with a constant control cycle interval.

In step S1 of Fig. 2, the control device 1 acquires information involved in the switching control of the traveling mode of the hybrid vehicle. That is, the control device 1 acquires the vehicle weight Wb, the tire diameter Dd, and the physical quantity Rd on the rolling resistance from the memory 11. In addition, the control device 1 receives each detection signal from the left and right wheel speed sensors 61L and 61R. Therefore, the control device 1 can calculate a current vehicle speed of the hybrid vehicle.

Furthermore, the control device 1 can detect the temperature inside the engine room in which the motor 5 is equipped by receiving the detection signal from the temperature sensor 62. The temperature inside the engine room corresponds to an ambient temperature for heat dissipation of the motor 5. In addition, the control device 1 grasps a history of a current flowing through the motor 5. Furthermore, thermal properties such as a heat capacity, heat generation properties, and heat dissipation properties of the motor 5 are known in advance. Therefore, the control device 1 obtains a heat generation quantity based on the temperature inside the engine room, obtains a heat dissipation quantity based on the temperature inside the engine room, estimates a history of a change of a temperature, and can estimate a current temperature Tm1 of the motor 5.

In addition, the control device 1 can detect the temperature of the cooling fluid of the inverter 52 by receiving the detection signal from the cooling fluid temperature sensor 53. The temperature of the cooling fluid corresponds to a reference temperature on cooling of the inverter 52. In addition, a current passing through the inverter 52 matches the current flowing through the motor 5. Furthermore, thermal properties such as heat capacity, heat generation properties, and heat dissipation properties of the inverter 52 are known in advance. Therefore, the control device 1 obtains a heat generation quantity based on the history of the current, obtains a heat dissipation quantity based on the temperature of the cooling fluid, estimates a history of a change of a temperature, and can estimate a current temperature Ti1 of the inverter 52.

Next, in step S2, the control device 1 acquires a load weight Ws obtained by combining persons riding in the hybrid vehicle and a cargo loaded thereon. The load weight Ws can be detected by providing, for example, a load sensor. Otherwise, the load weight Ws can be obtained by a calculating method illustrated in JP2001-304948A. The calculating method is, in short, a method in which if an acceleration that occurs during traveling is relatively large, the load weight Ws is small and if the acceleration is relatively small, the load weight Ws is large. Moreover, in a calculating method of a simple safety side, a maximum load weight stipulated in the hybrid vehicle may be used as the load weight Ws.

Next, in step S3, the control device 1 acquires information of a gradient angle A indicating a gradient of the uphill road. The gradient angle A can be detected by providing, for example, an acceleration sensor that is capable of detecting a direction of a weight acceleration. Otherwise, the control device 1 may obtain information of the gradient of a current position of the vehicle from a navigation device mounted on the vehicle.

Next, in step S4, first, the control device 1 determines whether or not prerequisites that "vehicle stops on the uphill road in the motor traveling mode" are satisfied. Since the control device 1 controls its own traveling mode, the control device 1 can easily determine whether or not it is the motor traveling mode and can recognize that the brake pedal 63 is not operated. In addition, the control device 1 can determine whether or not it is the uphill road based on information of the gradient angle A obtained in step S3. Furthermore, the control device 1 can determine whether or not the hybrid vehicle is stopped based on the vehicle speed obtained by calculation. In a case where the prerequisites are not satisfied, the control device 1 completes the process flow by omitting a process of each step thereafter.

If the prerequisites are satisfied, the control device 1 calculates a balanced driving force F using the following expression (Expression 1). In which, g represents the acceleration of gravity.

$$F = g \times \{(Wb + Ws) \times \sin A + Rd\} \cdots\cdots \text{ (Expression 1)}$$

The balanced driving force F is the driving force output from the motor 5 against a sliding-down force that causes the hybrid vehicle to be slid down on the uphill road.

Next, in step S5, the control device 1 estimates a change of a temperature Tm of the motor 5 in accordance with the balanced driving force F. While the hybrid vehicle is stopped on the uphill road, the balanced driving force F substantially remains a constant value and the heat generation quantity per unit time of the motor 5 also becomes substantially a constant value. Therefore, the control device 1 can estimate a saturation temperature TmF after a long period of time is elapsed based on the thermal properties and the heat generation quantity of the motor 5.

In addition, an instantaneous temperature Tm (using the same symbol as the temperature Tm) of the motor 5 that is changed with elapsed time is, in theory, represented in an estimation equation using the current temperature Tm1 and the saturation temperature TmF of the motor 5, and a thermal time constant that is a component of the thermal properties of the motor 5. Therefore, the control device 1 can estimate a change of the instantaneous temperature Tm of the motor 5 using the estimation equation indicating saturation characteristics of a temperature rise. Otherwise, the control device 1 may estimate the change of the instantaneous temperature Tm using a map of a table form in which an estimated value of the current temperature Tm1 of the motor 5 and the balanced driving force F are parameters instead of the estimation equation.

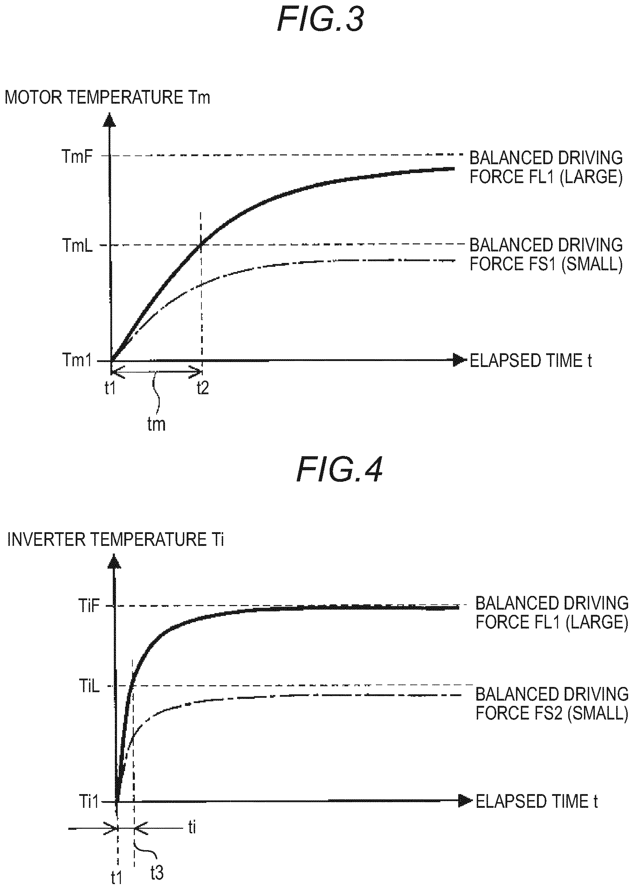

Fig. 3 is a graph illustrating an example in which the change of the temperature Tm of the motor 5 is estimated in accordance with the balanced driving force F. in Fig. 3, a horizontal axis indicates an elapsed time t from a current time t1 and a vertical axis indicates the estimated temperature Tm of the motor 5. In addition, a graph of a solid line indicates a case where a balanced driving force FL1 is large and a graph of an one dotted dashed-line indicates a case where a balanced driving force FS1 is small. The saturation temperature TmF of the motor 5 is large in a case where the balanced driving force FL1 is large compared to a case where the balanced driving force FS1 is small. Furthermore, the instantaneous temperature Tm of the motor 5 temporally steeply rises in a case where the balanced driving force FL1 is large compared to a case where the balanced driving force FS1 is small.

Next, in step S6, the control device 1 estimates the change of a temperature Ti of the inverter 52 in accordance with the balanced driving force F. The control device 1 can also perform the estimation of a saturation temperature TiF and an instantaneous temperature Ti (using the same symbol as the temperature Ti) of the inverter 52 using the same estimating method as that of the motor 5, that is, a method using an estimation equation representing the saturation characteristics of the temperature rise or a map of a table form.

Fig. 4 is a graph illustrating an example in which the change of the temperature Ti of the inverter 52 is estimated in accordance with the balanced driving force F. Graphs of a horizontal axis, a vertical axis, a solid line, and an one dotted dashed-line of Fig. 4 are indicated in the same displaying method as that of Fig. 3. The saturation temperature TiF of the inverter 52 is large in a case where a balanced driving force FL2 is large compared to a case where a balanced driving force FS2 is small. Furthermore, the instantaneous temperature Ti of the inverter 52 temporally steeply rise in a case where the balanced driving force FL2 is large compared to a case where the balanced driving force FS2 is small.

Moreover, in the example of Fig. 4, the thermal time constant of the inverter 52 is smaller than the thermal time constant of the motor 5. Therefore, the instantaneous temperature Ti of the inverter 52 illustrates a saturation tendency in a short time compared to the instantaneous temperature Tm of the motor 5.

Next, in step S7, the control device 1 calculates a drivable time tm of the motor 5. The drivable time tm indicates a time until the temperature Tm of the motor 5 reaches a motor-side upper limit allowable temperature TmL from the current time t1. The motor-side upper limit allowable temperature TmL that is set in advance is illustrated in Fig. 3. In a case where the balanced driving force FL1 is large, the temperature Tm of the motor 5 reaches the motor-side upper limit allowable temperature TmL at time t2. Therefore, the drivable time tm is a time from the current time t1 to the time t2. On the other hand, in a case where the balanced driving force FS1 is small, the saturation temperature is smaller than the motor-side upper limit allowable temperature TmL and the temperature Tm of the motor 5 does not reach the motor-side upper limit allowable temperature TmL. Therefore, the drivable time tm is infinitely long.

Next, in step S8, the control device 1 calculates an energizable time ti of the inverter 52. The energizable time ti indicates a time until the temperature Ti of the inverter 52 reaches an inverter-side upper limit allowable temperature TiL from the current time t1. The inverter-side upper limit allowable temperature TiL that is set in advance is illustrated in Fig. 4. In a case where the balanced driving force FL2 is large, the temperature Ti of the inverter 52 reaches the inverter-side upper limit allowable temperature TiL at time t3. Therefore, the energizable time ti is a time from the current time t1 to the time t3. On the other hand, in a case where the balanced driving force FS2 is small, the saturation temperature is smaller than the inverter-side upper limit allowable temperature TiL and the temperature Ti of the inverter 52 does not reach the inverter-side upper limit allowable temperature TiL. Therefore, the energizable time ti is infinitely long.

Next, in step S9, the control device 1 compares the drivable time tm and the energizable time ti in size. In step S10 or step S11, the control device 1 makes a smaller one of the drivable time tm and the energizable time ti to be a maintainable time t(on). The maintainable time t(on) means a limit time in which the temperatures Tm and Ti of the motor 5 and the inverter 52 do not reach the upper limit allowable temperatures TmL and TiL even if the motor traveling mode is maintained.

Next, in step S12, the control device 1 compares the maintainable time t(on) and a predetermined time t(th) in size. The predetermined time t(th) is set to be equal to or greater than a switching duration time required for switching the motor traveling mode to another traveling mode. It is preferable that the predetermined time t(th) is set in consideration of a margin time in addition to a time until a half-clutch state in which the clutch 3 is engaged while slipping together with start of the engine 2.

In step S13 in a case where the maintainable time t(on) is greater than the predetermined time t(th), the control device 1 maintains the motor traveling mode. In step S14 in a case where the maintainable time t(on) is equal to or less than the predetermined time t(th), the control device 1 switches the motor traveling mode to the engine traveling mode or the hybrid traveling mode. Therefore, the balanced driving force F of the motor 5 is absent or is reduced. Therefore, in the motor 5 and the inverter 52, the heat generation quantity is reduced and rise of the temperatures Tm and Ti is stopped.

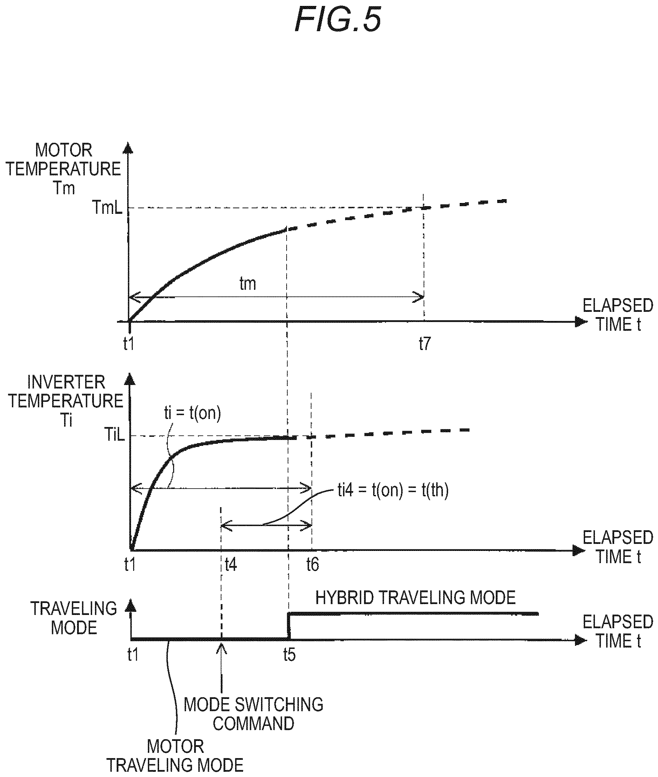

Fig. 5 is a diagram of a timing chart illustrating a case where the motor traveling mode is switched to another traveling mode. A horizontal axis of Fig. 5 is a common elapsed time t, an upper graph includes the temperature Tm of the motor 5, an intermediate graph indicates the temperature Ti of the inverter 52, and a lower graph indicates the traveling modes. In Fig. 5, the energizable time ti of the inverter 52 from the current time t1 to a time t6 is smaller than the drivable time tm of the motor 5 from the current time t1 to a time t7. Therefore, the energizable time ti becomes the maintainable time t(on). Conversely, a case where the drivable time tm is smaller than the energizable time ti and becomes the maintainable time t(on) may occur. At the current time t1, the energizable time ti is greater than the predetermined time t(th) and the motor traveling mode is maintained.

Then, when the current time is advanced to a time t4, an energizable time ti4 from the time t4 to the time t6 matches the predetermined time t(th). Therefore, the control device 1 issues a mode switching command at the time t4. A time t5 when the motor traveling mode is actually switched to the hybrid traveling mode is later than the time t4, but is before the time t6. Therefore, the temperatures Tm and Ti of the motor 5 and the inverter 52 do not rise after the time t5 and do not exceed the upper limit allowable temperatures TmL and TiL. Therefore, high temperature of the motor 5 and the inverter 52 is reliably prevented.

Moreover, the motor-side upper limit allowable temperature TmL and the inverter-side upper limit allowable temperature TiL are set in consideration of the temperature rise of the motor 5 and the inverter 52 corresponding to an increment of the driving force when the hybrid vehicle is started by maintaining the motor traveling mode. In detail, when starting on the uphill road in the motor traveling mode, the driving force that is greater than that during stop is required. Therefore, the temperatures Tm and Ti of the motor 5 and the inverter 52 transiently steeply rise. In consideration of this, the motor-side upper limit allowable temperature TmL and the inverter-side upper limit allowable temperature TiL are set to be lower by an amount of transient and steep temperature rise. Therefore, even when the hybrid vehicle is started, the motor 5 and the inverter 52 do not fall in a high temperature state.

A process function from step S1 to step S3 of the process flow of Fig. 2 corresponds to an information acquiring portion of the disclosure. Similarly, the process function of step S4 corresponds to a balanced driving force calculating portion, and the process functions of step S5 and step S6 correspond to a temperature change estimating portion. In addition, the process functions of step S7 and step S8 correspond to a time calculating portion. Furthermore, the process functions from step S9 to step S14 correspond to a mode switching portion.

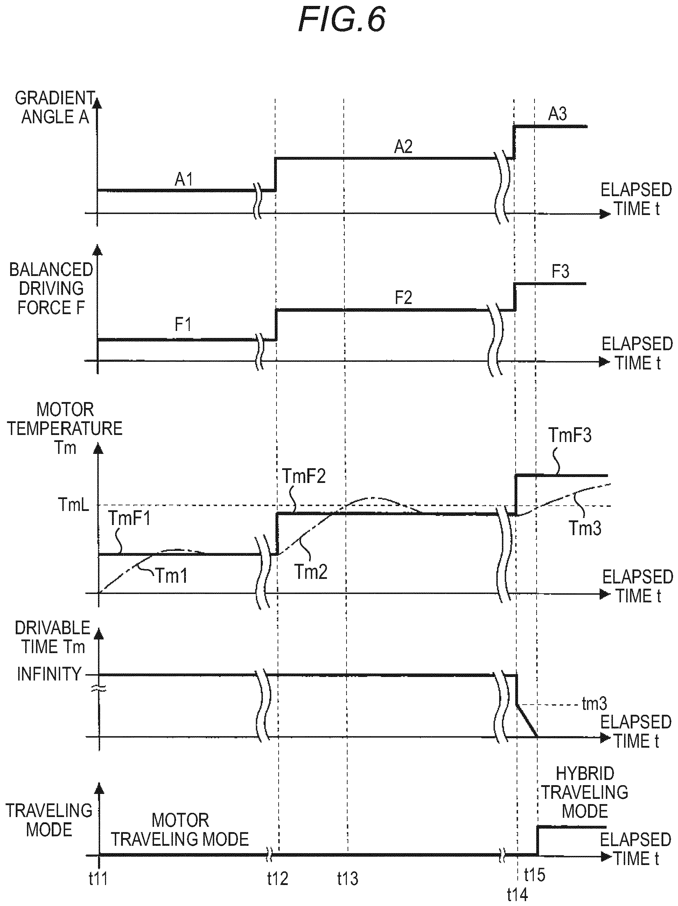

Next, Fig. 6 is a diagram of a timing chart illustrating control examples of the control device 1 which are changed in accordance with the gradient angle A of the uphill road. A horizontal axis of Fig. 6 is the common elapsed time t and the control examples of three cases are illustrated in time series. Five graphs respectively indicate the gradient angle A of the uphill road, the balanced driving force F, the temperature Tm of the motor 5, the drivable time tm of the motor 5, and the traveling mode in this order from above. For the temperature Tm of the motor 5, instantaneous temperatures Tm1, Tm2, and Tm3 which are changed together with the elapsed time are indicated by an one dotted dashed-line. Saturation temperatures TmF1, TmF2, and TmF3 after a long period of time is elapsed are indicated by a solid line. Moreover, in the control examples, the temperature Ti of the inverter 52 and the energizable time ti in which constraints of temperature rise characteristics and the upper limit allowable temperature are slower than those of the motor 5, are omitted because it does not substantially relate to the control.

The hybrid vehicle is stopped on a first uphill road in the motor traveling mode at a time t11 of Fig. 6. A gradient angle A1 of the first uphill road is small and a balanced driving force F1 is also small. A saturation temperature TmF1 of the motor 5, which is estimated immediately before the time t11, is greatly smaller than the motor-side upper limit allowable temperature TmL. In addition, an instantaneous temperature Tm1, which is changed together with the elapsed time, is also greatly smaller than the motor-side upper limit allowable temperature TmL. Therefore, the drivable time tm of the motor 5 is infinitely increased. Therefore, the motor traveling mode is not switched on the first uphill road.

The hybrid vehicle is stopped on a second uphill road in the motor traveling mode at a time t12 of Fig. 6. A gradient angle A2 of the second uphill road is moderate and a balanced driving force F2 is also moderate. A saturation temperature TmF2 of the motor 5, which is estimated immediately after the time t12, is slightly smaller than the motor-side upper limit allowable temperature TmL. In addition, an instantaneous temperature Tm2, which is changed together with the elapsed time, temporally exceeds the motor-side upper limit allowable temperature TmL after the time t13, but finally settles down to the saturation temperature TmF2. Therefore, the control device 1 determines that switching of the traveling mode is not required and the drivable time tm of the motor 5 is infinitely increased. Therefore, the motor traveling mode is not switched also in the second uphill road.

The hybrid vehicle is stopped on a third uphill road in the motor traveling mode at a time t14 of Fig. 6. A gradient angle A3 of the third uphill road is large and a balanced driving force F3 is also large. A saturation temperature TmF3 of the motor 5, which is estimated immediately after the time t14, exceeds the motor-side upper limit allowable temperature TmL. In addition, an instantaneous temperature Tm3, which is changed together with the elapsed time, exceeds the motor-side upper limit allowable temperature TmL at a time t15. A finite value tm3 is calculated immediately after the time t14 and, thereafter, the drivable time tm of the motor 5 gradually decreases. Therefore, the control device 1 performs controlling in which the traveling mode is not switched immediately at the time t14 and mode switching is completed before the time t15. Therefore, the motor traveling mode is switched to the hybrid traveling mode before the time t15 on the third uphill road.

In the control device 1 of the electric vehicle of Embodiment 1, the electric vehicle includes the motor 5 that rotationally drives the driving wheels 8L and 8R, the inverter 52 that adjusts the driving force output by controlling the current flowing through the motor 5, and the control device 1 that performs controlling to stop the electric vehicle, which is capable of switching the plurality of traveling modes including the motor traveling mode of traveling by only the motor 5 as the driving source, on the uphill road in the motor traveling mode. The control device 1 includes the information acquiring portion (step S1 to step S3) that acquires information involved in the switching control of the traveling modes of the electric vehicle and information on the gradient of the uphill road; the balanced driving force calculating portion (step S4) that determines whether the electric vehicle is stopped on the uphill road in the motor traveling mode based on acquired information and calculates the balanced driving force F output from the motor 5 against the sliding-down force that causes the electric vehicle to be slid down on the uphill road; the temperature change estimating portion (step S5 and step S6) that estimates the change of the temperature Tm of the motor 5 and the change of the temperature Ti of the inverter 52 based on the calculated balanced driving force F and the saturation characteristics of the temperature rise; the time calculating portion (step S7 and step S8) that calculates the drivable time tm until the temperature Tm of the motor 5 reaches the motor-side upper limit allowable temperature TmL that is set and the energizable time ti until the temperature Ti of the inverter 52 reaches the inverter-side upper limit allowable temperature TiL that is set based on the estimated change of the temperature; and the mode switching portion (step S9 to step S14) that switches the motor traveling mode to another traveling mode if a smaller one (maintainable time t(on)) of the drivable time tm and the energizable time ti is equal to or less than the predetermined time t(th).

Therefore, it is possible to estimate the change of the temperatures Tm and Ti of the motor 5 and the inverter 52, and to calculate the drivable time tm and the energizable time ti based on the size of the balanced driving force and the saturation characteristics of the temperature rise. Thus, it is possible to realize the stop of the hybrid vehicle on the uphill road by the motor traveling mode up to the limit of the predetermined time t(th). Therefore, quick start of the hybrid vehicle on the uphill road can be performed. In addition, fuel economy is improved compared to a case of stopping using the driving force of the engine 2. Furthermore, when reaching the limit of the predetermined time t(th), the motor traveling mode is switched to another traveling mode and thereby the driving force of the motor 5 is reduced. Thus, the heat generation quantity of the motor 5 and the inverter 52 is reduced and thereby it is possible to prevent the high temperature thereof.

Furthermore, the temperature change estimating portion estimates the instantaneous temperature Tm of the motor 5 that is changed together with an elapsed time and the saturation temperature TmF of the motor after a long period of time is elapsed, and the instantaneous temperature Ti of the inverter 52 that is changed together with the elapsed time and the saturation temperature TiF of the inverter after a long period of time is elapsed. The time calculating portion calculates the drivable time tm based on at least one of the instantaneous temperature Tm and the saturation temperature TmF of the motor 5, and calculates the energizable time ti based on at least one of the instantaneous temperature Ti and the saturation temperature TiF of the inverter 52.

Therefore, it is possible to estimate the change of the temperatures Tm and Ti with high accuracy and to calculate the drivable time tm and the energizable time ti with high accuracy in view of the saturation characteristics of the temperature rise. Thus, the effect of realizing the motor traveling mode to the maximum and the effect of preventing the high temperature are reliably remarkable.

Furthermore, the temperature change estimating portion uses the estimation equation using the estimated values of the current temperatures Tm1 and Ti1 of the motor 5 and the inverter 52, and the balanced driving force F, or the map of the table form in which the estimated values of the current temperatures Tm1 and Ti1 of the motor 5 and the inverter 52, and the balanced driving force F are parameters. Therefore, since a dedicated the temperature sensor for detecting the current temperatures Tm1 and Ti1 of the motor 5 and the inverter 52 are not required, it is possible to reduce the cost.

Furthermore, the information involved in the switching control of the traveling mode of the hybrid vehicle (electric vehicle) includes at least one piece of information among the vehicle weight Wb, the load weight Ws, the tire diameter Dd of the driving wheels 8L and 8R, the physical quantity Rd on the rolling resistance of the driving wheels 8L and 8R, the temperature inside the engine room correlating to the current temperature Tm1 of the motor 5, the temperature of the cooling fluid correlating to the current temperature Ti1 of the inverter 52, the current traveling mode, and the current vehicle speed. Calculation accuracy and estimation accuracy of the balanced driving force calculating portion, the temperature change estimating portion, and the time calculating portion are improved by obtaining the pieces of information, and accuracy of the control is further improved.

Furthermore, the motor-side upper limit allowable temperature TmL and the inverter-side upper limit allowable temperature TiL are set in consideration of the temperature rises of the motor 5 and the inverter 52 corresponding to the increment of the driving force when the hybrid vehicle (electric vehicle) is started by maintaining the motor traveling mode. Therefore, whenever the hybrid vehicle is started, the motor 5 and the inverter 52 do not fall into the high temperature state.

Furthermore, the predetermined time t(th) in the mode switching portion is set to be equal to or greater than the switching duration time required for switching the motor traveling mode to another traveling mode. Therefore, switching of the traveling mode is completed before the temperatures tm and ti of the motor 5 and the inverter 52 reach the upper limit allowable temperatures TmL and TiL. Thus, the high temperature of the motor 5 and the inverter 52 is reliably prevented.

Next, a control device of an electric vehicle of Embodiment 2 will be described in main differences from Embodiment 1. In Embodiment 2, an entire configuration of a driving device of a hybrid vehicle is the same as that of Embodiment 1 illustrated in Fig. 1, setting of a motor-side upper limit allowable temperature TmL and an inverter-side upper limit allowable temperature TiL, and a process flow of a control device are different from those of Embodiment 1.

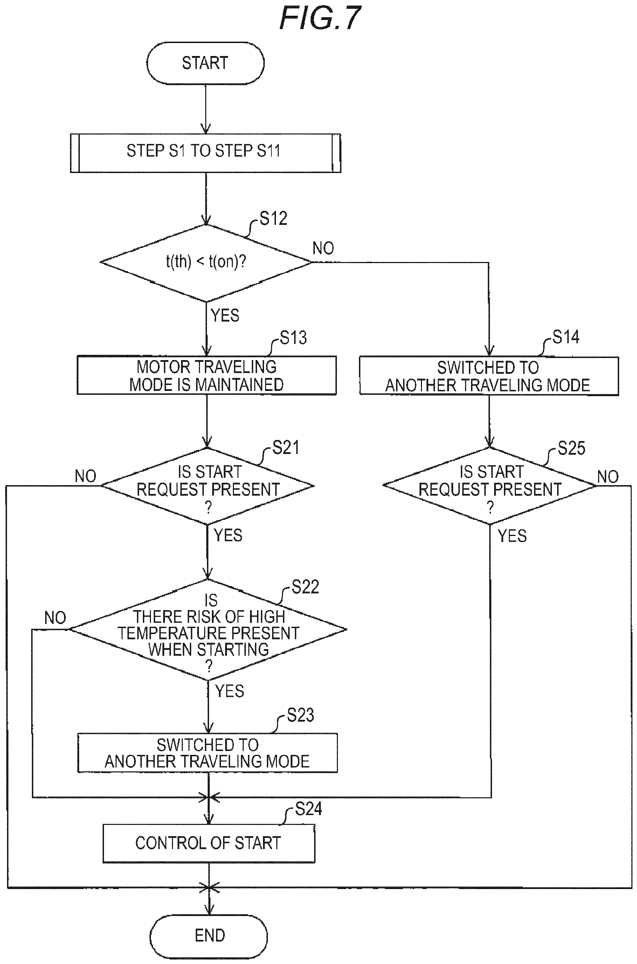

In Embodiment 2, a motor-side upper limit allowable temperature TmL and an inverter-side upper limit allowable temperature TiL are set to a very upper limit without consideration of excessive and steep temperature rise during start. Thus, if the hybrid vehicle is started by maintaining the motor traveling mode, there is concern of falling into the high temperature state. In the control device of Embodiment 2, in a case where there is a concern of the high temperature state, the high temperature state is avoided in advance by starting by switching the motor traveling mode. Fig. 7 is a process flow chart describing a control operation of the control device of the electric vehicle of Embodiment 2. Steps from step S1 to step S14 in the figure are the same process contents as those of Embodiment 1.

In step S21 following step S13 of Fig. 7, the control device 1 determines presence or absence of a start request. For example, when an operation quantity of an accelerator pedal 65 is increased, the control device 1 determines that the start request is present. The control device 1 completes the process flow when the start request is absent and proceeds execution of the process flow to step S22 if the start request is present. In step S22, the control device determines whether or not there is a concern of the high temperature during start. In details, the control device assumes that the hybrid vehicle is started by maintaining the motor traveling mode and estimates that the temperature rise corresponding to an increment of a driving force during the start is generated in the motor 5 and the inverter 52. The control device determines whether or not there is a concern that the temperature Tm of the motor 5 exceeds the motor-side upper limit allowable temperature TmL and determines whether or not there is a concern that the temperature Ti of the inverter 52 exceeds the inverter-side upper limit allowable temperature TiL based on an estimated result.

If at least one has the concern of the high temperature, in step S23, the control device switches the motor traveling mode to another traveling mode. After completion of step S23, the process proceeds to step S24 and the control device controls the start of the hybrid vehicle. Therefore, the driving force required for the motor 5 is reduced during the start compared to a case where the motor traveling mode is maintained. Thus, there is no concern that the motor 5 and the inverter 52 fall into the high temperature state. In addition, in step S22, in a case where there is no concern of the high temperature, in step S24, the control device controls the start of the hybrid vehicle in the motor traveling mode. Also in this case, there is no concern that the motor 5 and the inverter 52 fall into the high temperature state.

On the other hand, also in step S25 following step S14, the control device determines presence or absence of the start request. The control device completes the process flow when the start request is absent and proceeds execution of the process flow to step S24 if the start request is present. After controlling the start in step S24, the control device completes the process flow. Process functions from step S21 to step S24 of the process flow of Fig. 7 correspond to a starting mode switching portion of the disclosure.

The control device of the electric vehicle of Embodiment 2 further includes the starting mode switching portion (step S21 to step S24) that causes the electric vehicle to be started by switching the motor traveling mode to another traveling mode in a case where the hybrid vehicle (electric vehicle) is assumed to be started by maintaining the motor traveling mode, the temperature rise corresponding to the increment of the driving force during start is generated in the motor 5 and the inverter 52, and then there is a concern that the temperature Tm of the motor 5 exceeds the motor-side upper limit allowable temperature TmL, or in a case where there is a concern that the temperature Ti of the inverter 52 exceeds the inverter-side upper limit allowable temperature TiL.

Therefore, since the motor-side upper limit allowable temperature TmL and the inverter-side upper limit allowable temperature TiL can be set higher than those of Embodiment 1, it is possible to realize the stop of the vehicle on the uphill road in the motor traveling mode to the maximum. However, there is a need to switch the motor traveling mode to another traveling mode during the start depending on temperature conditions of the motor 5 and the inverter 52.

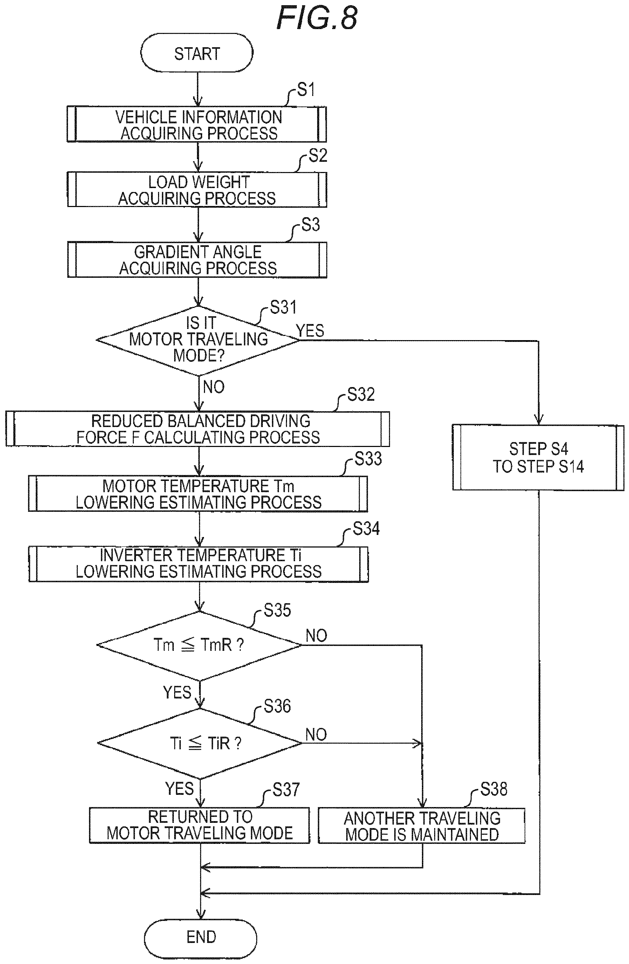

Next, a control device of an electric vehicle of Embodiment 3 will be described in main differences from the first and second embodiments. In Embodiment 3, an entire configuration of a driving device of a hybrid vehicle is the same as that of Embodiment 1 illustrated in Fig. 1, a process flow of a control device is different from those of the first and second embodiments. In Embodiment 3, the control device resumes a motor traveling mode if temperatures Tm and Ti of a motor 5 and an inverter 52 are lowered after a motor traveling mode is switched to another traveling mode. Fig. 8 is a process flow chart describing a control operation of the control device of the electric vehicle of Embodiment 3. Steps from step S1 to step S14 in the figure are the same process contents as those of Embodiment 1.

In step S31 following step S3 of Fig. 8, the control device determines whether or not a current traveling mode is the motor traveling mode. During the motor traveling mode, the control device completes the process flow by performed the same processes as those of step S4 to step S14 of Embodiment 1. In step S32 during another traveling mode, the control device calculates a reduced balanced driving force F. For example, in a case of the engine traveling mode, the balanced driving force F output by the motor 5 is zero. In addition, for example, in a case of the hybrid traveling mode, the balanced driving force F is distributed to the engine 2 and the motor 5. The control device can easily calculate the reduced balanced driving force F of the motor 5 by controlling both the engine 2 and the motor 5.

Next, in step S33, the control device 1 estimates lowering of the temperature Tm of the motor 5 in accordance with the reduced balanced driving force F. In the next step S34, the control device 1 estimates lowering of the temperature Ti of the inverter 52 in accordance with the reduced balanced driving force F. An estimating method of lowering of the temperatures Tm and Ti are the same as that of step S5 and step S6 described in Embodiment 1 even if there is differences in raising and lowering.

Next, in step S35, the control device compares the temperature Tm and a motor-side resuming allowable temperature TmR of the motor 5 in size. Furthermore, in the next step S36, the control device compares the temperature Ti and an inverter-side resuming allowable temperature TiR of the inverter 52 in size. If the temperatures Tm and Ti of the motor 5 and the inverter 52 are lowered to be equal to or less than the resuming allowable temperatures TmR and TiR, in step S37, the control device returns another traveling mode to the motor traveling mode. In addition, at least one of the temperatures Tm and Ti of the motor 5 and the inverter 52 is not lowered to the resuming allowable temperatures TmR and TiR, in step S38, the control device maintains another traveling mode.

After completion of step S37 or step S38, the control device completes the process flow. Process functions from step S32 to step S34 of the process flow of Fig. 9 correspond to a temperature lowering estimating portion of the disclosure. Process functions from step S35 to step S37 correspond to a motor traveling mode resuming portion of the disclosure.

Moreover, the motor-side resuming allowable temperature TmR is set lower than the motor-side upper limit allowable temperature TmL. similarly, the inverter-side resuming allowable temperature TiR is also set lower than the inverter-side upper limit allowable temperature TiL. If the setting in which the hysteresis described above is provided, an event, in which the traveling mode is frequently switched caused by raising and lowering of the temperatures Tm and Ti of the motor 5 and the inverter 52 across the upper limit allowable temperatures TmL and TiL, is prevented.

The control device of the electric vehicle of Embodiment 3 further includes the temperature lowering estimating portion (step S32 to step S34) that estimates lowering of the temperature Tm of the motor 5 and lowering of the temperature Ti of the inverter 52 after the mode switching portion switches the motor traveling mode to another traveling mode, and the motor traveling mode resuming portion (step S34 to step S37) that returns another traveling mode to the motor traveling mode when the estimated temperature Tm of the motor 5 is lowered to be equal to or less than the motor-side resuming allowable temperature TmR that is lower than the motor-side upper limit allowable temperature TmL and the estimated temperature Ti of the inverter 52 is lowered to be equal to or less than the inverter-side resuming allowable temperature TiR that is lower than the inverter-side upper limit allowable temperature TiL.

Therefore, even after being switched to another traveling mode, if the temperatures Tm and Ti of the motor 5 and the inverter 52 are lowered, the motor traveling mode is resumed. Thus, the motor traveling mode is realized to the maximum and the high temperature is reliably prevented.

Moreover, the disclosure is also able to be performed in an electric vehicle other than the hybrid vehicle. For example, the disclosure is also able to be performed in an electric vehicle which includes a main motor and an auxiliary motor as driving sources, and switches a motor traveling mode in which only the main motor is the driving source and a parallel traveling mode in which both motors are the driving sources. In addition, for example, the disclosure is also able to be performed in an electric vehicle which includes a motor and a transmission connected there to as a driving source in series, and switches a motor traveling mode in which the vehicle travels in a specific gear stage of the transmission and another traveling mode in which the vehicle travels in a gear state other than the specific gear stage.

In addition, in order to estimate the current temperatures Tm1 and Ti1 of the motor 5 and the inverter 52, a temperature detecting unit other than the temperature sensor 62 and the cooling fluid temperature sensor 53 may be used. Besides, various changes and applications can be performed in the disclosure.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A control device of an electric vehicle which includes
   a motor (5) that rotationally drives driving wheels (8L, 8R),
   an inverter (52) that adjusts a driving force output by controlling a current flowing through the motor, and
   a control device (1) that performs controlling to stop the electric vehicle, which is capable of switching a plurality of traveling modes including a motor traveling mode of traveling by only the motor as a driving source, an engine traveling mode of traveling by only an engine as a driving source, and a hybrid traveling mode of traveling while enabling use of the driving forces of the engine and the motor together, on an uphill road in the motor traveling mode, the control device comprising:

   an information acquiring portion (S1) that acquires information involved in a switching control of the traveling modes of the electric vehicle and information on a gradient of the uphill road;
   a balanced driving force calculating portion (S4) that determines that the electric vehicle is stopped on the uphill road in the motor traveling mode based on acquired information and calculates a balanced driving force (F) output from the motor against a sliding-down force that causes the electric vehicle to be slid down on the uphill road;
   **characterised in that**
   the control device further comprises:

   a temperature change estimating portion (S5, S6) that estimates a change of a temperature of the motor (Tm) and a change of a temperature of the inverter (Ti) based on a calculated balanced driving force, which corresponds to a heat generation quantity per unit time of the motor while the vehicle is stopped on the uphill road, and saturation characteristics of temperature rise, wherein the temperature change estimating portion uses an estimation equation indicating the saturation characteristics and using estimated values of current temperatures of the motor and the inverter, and the balanced driving force, or a map of a table form in which the estimated values of the current temperatures of the motor and the inverter, and the balanced driving force are parameters;

a time calculating portion (S7, S8) that calculates a drivable time (tm) until the temperature of the motor reaches a motor-side upper limit allowable temperature (TmL) and an energizable time (ti) until the temperature of the inverter reaches an inverter-side upper limit allowable temperature (TiL) that are set based on the estimated change of the temperature; and

a mode switching portion (S12) that switches the motor traveling mode to another traveling mode of the plurality of traveling modes if a smaller one of the drivable time and the energizable time is equal to or less than a predetermined time, which is set to be equal to or greater than a switching duration time required for switching the motor traveling mode to the another traveling mode.

2. The control device of an electric vehicle according to claim 1,
wherein the temperature change estimating portion estimates an instantaneous temperature (Tm) of the motor that is changed together with an elapsed time and a saturation temperature (TmL) of the motor after a long period of time is elapsed, and an instantaneous temperature (Ti) of the inverter that is changed together with an elapsed time and a saturation temperature (TiL) of the inverter after a long period of time is elapsed, and
wherein the time calculating portion calculates the drivable time based on at least one of the instantaneous temperature and the saturation temperature of the motor, and calculates the energizable time based on at least one of the instantaneous temperature and the saturation temperature of the inverter.

3. The control device of an electric vehicle according to claim 1 or 2,
wherein the information involved in the switching control of the traveling mode of the electric vehicle includes at least one piece of information among a vehicle weight, a load weight, a tire diameter of the driving wheels, a physical quantity on the rolling resistance of the driving wheels, a temperature correlating to the current temperature of the motor, a temperature correlating to the current temperature of the inverter, a current traveling mode, and a current vehicle speed.

4. The control device of an electric vehicle according to any one of claims 1 to 3,
wherein the motor-side upper limit allowable temperature and the inverter-side upper limit allowable temperature are set in consideration of the temperature rises of the motor and the inverter corresponding to an increment of the driving force when the electric vehicle is started by maintaining the motor traveling mode.

5. The control device of an electric vehicle according to any one of claims 1 to 3, further comprising:
a starting mode switching portion that causes the electric vehicle to be started by switching the motor traveling mode to another traveling mode in a case where the electric vehicle is assumed to be started by maintaining the motor traveling mode, the temperature rise corresponding to the increment of the driving force during start is generated in the motor and the inverter, and then there is a concern that the temperature of the motor exceeds the motor-side upper limit allowable temperature, or in a case where there is a concern that the temperature of the inverter exceeds the inverter-side upper limit allowable temperature.

6. The control device of an electric vehicle according to claim 1, further comprising:

a temperature lowering estimating portion that estimates lowering of the temperature of the motor and lowering of the temperature of the inverter after the mode switching portion switches the motor traveling mode to the another traveling mode, and
a motor traveling mode resuming portion that returns the another traveling mode to the motor traveling mode when an estimated temperature of the motor is lowered to be equal to or less than a motor-side resuming allowable temperature that is lower than the motor-side upper limit allowable temperature and an estimated temperature of the inverter is lowered to be equal to or less than an inverter-side resuming allowable temperature that is lower than the inverter-side upper limit allowable temperature.

**Patentansprüche**

1. Steuervorrichtung für ein Elektrofahrzeug mit
einem Motor (5), der Antriebsräder (8L, 8R) zur Drehung antreibt,

einem Inverter (52), der eine Antriebskraft, die durch Steuern eines durch den Motor fließenden Stroms ausgegeben wird, einstellt, und

einer Steuervorrichtung (1), die eine Steuerung zum Stoppen des Elektrofahrzeugs, das dazu in der Lage ist, zwischen mehreren Fortbewegungsmodi, die einen Motorfortbewegungsmodus zum Fortbewegen lediglich mit dem Motor als einer Antriebsquelle, einen Brennkraftmaschinenfortbewegungsmodus zum Fortbewegen lediglich mit einer Brennkraftmaschine als einer Antriebsquelle und einen Hybridfortbewegungsmodus zum Fortbewegen unter Verwendung der Antriebskräfte der Brennkraftmaschine und des Motors beinhalten, umzuschalten, auf einer ansteigenden Straße in dem Motorbewegungsmodus durchführt,

wobei die Steuervorrichtung aufweist:

einen Informationserfassungsabschnitt (S1), der Information in Bezug auf eine Umschaltsteuerung der Fortbewegungsmodi des Elektrofahrzeugs und Information in Bezug auf einen Gradienten der ansteigenden Straße erfasst;

einen Ausgleichsantriebskraftberechnungsabschnitt (S4), der basierend auf erfasster Information bestimmt, dass das Elektrofahrzeug in dem Motorbewegungsmodus auf der ansteigenden Straße gestoppt wird, und eine Ausgleichsantriebskraft (F), die von dem Motor gegen eine Hangabtriebskraft, die bewirkt, dass das Elektrofahrzeug auf der ansteigenden Straße nach unten rollt, ausgegeben wird, berechnet;

**dadurch gekennzeichnet, dass**

die Steuervorrichtung ferner aufweist:

einen Temperaturänderungsbestimmungsabschnitt (S5, S6), der eine Änderung einer Temperatur des Motors (Tm) und eine Änderung einer Temperatur des Inverters (Ti) basierend auf einer berechneten Ausgleichsaritriebskraft, die einer Wärmeerzeugungsmenge pro Zeiteinheit des Motors, während das Fahrzeug auf der ansteigenden Straße gestoppt ist, entspricht, und Sättigungscharakteristiken eines Temperaturanstiegs bestimmt, wobei der Temperaturänderungsbestimmungsabschnitt eine Bestimmungsgleichung, die die Sättigungscharakteristiken angibt und bestimmte Werte von aktuellen Temperaturen des Motors und des Inverters und die Ausgleichsantriebskraft verwendet, oder ein Kennfeld in Tabellenform, in dem die bestimmten Werte der aktuellen Temperaturen des Motors und des Inverters und die Ausgleichsantriebskraft Parameter sind, verwendet;

einen Zeitberechnungsabschnitt (S7, S8), der eine Antriebszeit (tm), bis die Temperatur des Motors eine motorseitige obere erlaubte Grenztemperatur (TmL) erreicht, und eine Erregungszeit (ti), bis die Temperatur des Inverters eine inverterseitige obere erlaubte Grenztemperatur (TiL) erreicht, die basierend auf der bestimmten Änderung der Temperatur eingestellt werden, berechnet; und

einen Modusumschaltabschnitt (S12), der den Motorfortbewegungsmodus zu einem anderen Fortbewegungsmodus der mehreren Fortbewegungsmodi umschaltet, wenn eine kleinere der Antriebszeit und der Erregungszeit kleiner oder gleich einer vorbestimmten Zeit ist, die so eingestellt ist, dass sie größer oder gleich einer Umschaltdauer ist, die zum Umschalten des Motorfortbewegungsmodus zu dem anderen Fortbewegungsmodus benötigt wird.

2. Steuervorrichtung für ein Elektrofahrzeug nach Anspruch 1,
bei der der Temperaturänderungsbestimmungsabschnitt eine momentane Temperatur (Tm) des Motors, die zusammen mit einer verstrichenen Zeit geändert wird, und eine Sättigungstemperatur (TmL) des Motors nach einer langen Zeit sowie eine momentane Temperatur (Ti) des Inverters, die zusammen mit einer verstrichenen Zeit geändert wird, und eine Sättigungstemperatur (TiL) des Inverters nach einer langen Zeit bestimmt und
bei der der Zeitberechnungsabschnitt die Antriebszeit basierend auf mindestens der momentanen Temperatur oder der Sättigungstemperatur des Motors berechnet und die Erregungszeit basierend auf mindestens der momentanen Temperatur oder der Sättigungstemperatur des Inverters berechnet.

3. Steuervorrichtung für ein Elektrofahrzeug nach Anspruch 1 oder 2,
bei der die Information in Bezug auf die Umschaltsteuerung des Fortbewegungsmodus des Elektrofahrzeugs mindestens eine Information von einem Fahrzeuggewicht, einem Lastgewicht, einem Reifendurchmesser der Antriebsräder, einer physikalischen Größe in Bezug auf den Rollwiderstand der Antriebsräder, einer Temperatur, die mit der aktuellen Temperatur des Motors korreliert ist, einer Temperatur, die mit der aktuellen Temperatur des Inverters korreliert ist, einem aktuellen Fortbewegungsmodus und einer aktuellen Fahrzeuggeschwindigkeit beinhaltet.

4. Steuervorrichtung für ein Elektrofahrzeug nach einem der Ansprüche 1 bis 3,
bei der die motorseitige obere erlaubte Grenztemperatur und die inverterseitige obere erlaubte Grenztemperatur in Anbetracht der Temperaturanstiege des Motors und des Inverters, die einer Zunahme der Antriebskraft, wenn das Elektrofahrzeug unter Beibehaltung des Motorfortbewegungsmodus gestartet wird, entsprechen, eingestellt werden.

5. Steuervorrichtung für ein Elektrofahrzeug nach einem der Ansprüche 1 bis 3, ferner mit:
einem Startmodusumschaltabschnitt, der bewirkt, dass das Elektrofahrzeug durch Umschalten des Motorfortbewegungsmodus zu einem anderen Fortbewegungsmodus gestartet wird, wenn davon ausgegangen wird, dass das Elektrofahrzeug unter Beibehaltung des Motorfortbewegungsmodus gestartet wird, der Temperaturanstieg, der der Zunahme der Antriebskraft während des Starts entspricht, in dem Motor und dem Inverter erzeugt wird und die Befürchtung besteht, dass die Temperatur des Motors die motorseitige obere erlaubte Grenztemperatur überschreitet, oder die Befürchtung besteht, dass die Temperatur des Inverters die inverterseitige obere erlaubte Grenztemperatur überschreitet.

6. Steuervorrichtung für ein Elektrofahrzeug nach Anspruch 1, ferner mit:

einem Temperaturverringerungsbestimmungsabschnitt, der eine Verringerung der Temperatur des Motors und eine Verringerung der Temperatur des Inverters nach Umschalten des Motorfortbewegungsmodus zu dem anderen Fortbewegungsmodus durch den Modusumschaltabschnitt bestimmt, und
einem Motorfortbewegungsmoduswiederaufnahmeabschnitt, der den anderen Fortbewegungsmodus zu dem Motorfortbewegungsmodus zurückändert, wenn eine geschätzte Temperatur des Motors so verringert ist, dass sie kleiner oder gleich einer motorseitigen erlaubten Wiederaufnahmetemperatur ist, die niedriger als die motorseitige obere erlaubte Grenztemperatur ist, und eine bestimmte Temperatur des Inverters so verringert ist, dass sie kleiner oder gleich einer inverterseitigen erlaubten Wiederaufnahmetemperatur ist, die niedriger als die inverterseitige obere erlaubte Grenztemperatur ist.

## Revendications

1. Dispositif de commande d'un véhicule électrique qui comprend un moteur électrique (5) qui entraine en rotation des roues motrices (8L, 8R),
un onduleur (52) qui ajuste une sortie de force d'entraînement en contrôlant un courant circulant à travers le moteur électrique, et
un dispositif de commande (1) qui effectue une commande pour arrêter le véhicule électrique, qui est capable de commuter une pluralité de modes de déplacement comprenant un mode de déplacement moteur électrique de déplacement uniquement avec le moteur électrique comme une source d'entraînement, un mode de déplacement moteur à combustion de déplacement uniquement avec le moteur à combustion comme une source d'entraînement, et un mode de déplacement hybride de déplacement tout en permettant l'utilisation des forces d'entraînement du moteur à combustion et du moteur électrique ensemble, dans une route en montée dans le mode de déplacement moteur électrique,
le dispositif de commande comprenant :

une partie d'acquisition d'information (S1) qui acquiert des informations impliquées dans une commande de commutation des modes de déplacement du véhicule électrique et informations sur un gradient de la route en montée ;
une partie de calcul de force d'entraînement équilibrée (S4) qui détermine que le véhicule électrique est arrêté sur la route en montée dans le mode de déplacement moteur électrique sur la base d'informations acquises et calcule une force d'entraînement équilibrée (F) sortie du moteur électrique contre une force de glissement vers le bas qui fait glisser le véhicule électrique vers le bas sur la route en montée ;
**caractérisé en ce que**
le dispositif de commande comprend en outre :

une partie d'estimation de changement de température (S5, S6) qui estime un changement d'une température du moteur électrique (Tm) et un changement d'une température de l'onduleur (Ti) basé sur une force d'entraînement équilibrée calculée, qui correspond à une quantité de chaleur généré par unité de temps du moteur électrique pendant que le véhicule est arrêté sur la route en montée, et les caractéristiques de saturation de l'élévation de température, où la partie d'estimation de changement de température utilise une équation d'estimation indiquant les caractéristiques de saturation et utilisant des valeurs estimées des températures actuelles du moteur électrique et l'onduleur, et la force d'entraînement équilibrée, ou une carte d'une forme de table dans laquelle les valeurs estimées des températures actuelles du moteur électrique et de l'onduleur, et la force d'entraînement équilibrée sont des paramètres ;

**14**

une partie de calcul de temps (S7, S8) qui calcule un temps de conduite (tm) jusqu'à ce que la température du moteur électrique atteint une température acceptable limite supérieure côté moteur électrique (TmL) et un temps énergisable (ti) jusqu'à ce que la température de l'onduleur atteigne une température acceptable limite supérieure côté onduleur (TiL) qui est établie sur la base du changement estimé de la température; et une partie de commutation de mode (S12) qui commute le mode de déplacement moteur électrique à un autre mode de déplacement de la pluralité de modes de déplacement si un plus petit temps parmi le temps de conduite et le temps énergisable est égal à ou inférieur à un temps prédéterminé, qui est réglé pour être égal ou supérieur à une durée de commutation requise pour la commutation du mode de déplacement moteur électrique à l'autre mode de déplacement.

2. Dispositif de commande d'un véhicule électrique selon la revendication 1,
dans lequel la partie d'estimation de changement de température estime une température instantanée (Tm) du moteur électrique qui est changée avec un temps écoulé et une température de saturation (TmL) du moteur électrique après qu'une longue période de temps est écoulée, et une température instantanée (Ti) de l'onduleur qui est changée avec un temps écoulé et une température de saturation (TiL) de l'onduleur après qu'une longue période de temps est écoulée, et
dans lequel la partie de calcul de temps calcule le temps de conduite sur la base d'au moins une température parmi la température instantanée et la température de saturation du moteur électrique, et calcule le temps énergisable sur la base d'au moins une température parmi la température instantanée et la température de saturation de l'onduleur.

3. Dispositif de commande d'un véhicule électrique selon la revendication 1 ou 2,
dans lequel les informations impliquées dans la commande de commutation du mode de déplacement du véhicule électrique comprend au moins une information parmi une masse de véhicule, une masse de charge, un diamètre de pneumatique des roues d'entraînement, une quantité physique sur la résistance au roulement des roues d'entraînement, une température corrélée à la température actuelle du moteur électrique, une température corrélée à la température actuelle de l'onduleur, un mode de déplacement actuel et une vitesse de véhicule actuel.

4. Dispositif de commande d'un véhicule électrique selon l'une quelconque des revendications 1 à 3,
dans lequel la température acceptable limite supérieure côté moteur électrique et la température acceptable limite supérieur côté onduleur sont réglées en tenant compte des augmentations de température du moteur électrique et de l'onduleur correspondant à un incrément de la force d'entraînement lorsque le véhicule électrique est démarré en maintenant le mode de déplacement moteur électrique.

5. Dispositif de commande d'un véhicule électrique selon l'une quelconque des revendications 1 à 3, comprenant en outre :
une partie de commutation de mode de démarrage qui provoque le démarrage du véhicule électrique en commutant le mode de déplacement moteur électrique vers un autre mode de déplacement dans le cas où le véhicule électrique est supposé être démarré en maintenant le mode de déplacement du moteur électrique, l'élévation de température correspondant à l'incrément de la force d'entraînement pendant que le démarrage est généré dans le moteur électrique et l'onduleur, et après il y a une préoccupation que la température du moteur électrique dépasse la température acceptable limite supérieure coté moteur électrique, ou dans le cas où il y a une préoccupation que la température de l'onduleur dépasse la température acceptable limite supérieure côté onduleur.

6. Dispositif de commande d'un véhicule électrique selon la revendication 1, comprenant en outre :

une partie d'estimation d'abaissement de température qui estime l'abaissement de la température du moteur électrique et l'abaissement de la température de l'onduleur après que la partie de commutation de mode commute le mode de déplacement moteur électrique à l'autre mode de déplacement, et
une partie de reprise de mode de déplacement moteur électrique qui ramène l'autre mode de déplacement au mode de déplacement moteur électrique lorsqu'une température estimée du moteur électrique est abaissée pour être égale à ou inférieure à une température acceptable de retour côté moteur électrique qui est inférieure à la température acceptable limite supérieure côté moteur électrique et une température estimée de l'onduleur est abaissée pour être égale à ou inférieure à une température acceptable de reprise côté onduleur qui est inférieure à la température acceptable limite supérieure côté onduleur.

## FIG.1

## FIG.2

START

VEHICLE INFORMATION ACQUIRING PROCESS — S1

LOAD WEIGHT ACQUIRING PROCESS — S2

GRADIENT ANGLE ACQUIRING PROCESS — S3

BALANCED DRIVING
FORCE F CALCULATING PROCESS — S4

MOTOR TEMPERATURE Tm
CHANGE ESTIMATING PROCESS — S5

INVERTER TEMPERATURE Ti
CHANGE ESTIMATING PROCESS — S6

MOTOR DRIVABLE TIME tm CALCULATING PROCESS — S7

INVERTER ENERGIZABLE
TIME ti CALCULATING PROCESS — S8

S9

tm < ti — NO

YES — S10     S13

t(on) = tm       t(on) = ti

S12
NO

t(th) = t(on)

YES — S13     S14

MOTOR TRAVELING
MODE IS MAINTAINED     SWITCHED TO ANOTHER
TRAVELING MODE

END

# FIG.3

MOTOR TEMPERATURE Tm

TmF — — — — — — — — — — — — — — — — — — — BALANCED DRIVING
FORCE FL1 (LARGE)

TmL — — — — — — — — — — — — BALANCED DRIVING
FORCE FS1 (SMALL)

Tm1

t1          t2          ELAPSED TIME t

tm

# FIG.4

INVERTER TEMPERATURE Ti

TiF — — — — — — — — — — — — — — — — — — BALANCED DRIVING
FORCE FL1 (LARGE)

TiL — — — — — — — — — — — — BALANCED DRIVING
FORCE FS2 (SMALL)

Ti1

t1   t3          ELAPSED TIME t

ti

# FIG.5

MOTOR
TEMPERATURE
Tm

TmL

tm

ELAPSED
TIME t

t1                                    t7

INVERTER
TEMPERATURE
Ti

ti = t(on)

TiL

ti4 = t(on) = t(th)

ELAPSED
TIME t

t1        t4        t6

TRAVELING
MODE

HYBRID TRAVELING MODE

ELAPSED
TIME t

t1                t5

MODE SWITCHING
COMMAND

MOTOR
TRAVELING MODE

EP 3 147 154 B1

## FIG.6

20

## FIG.7

```
                    ┌─────────────┐
                    │    START    │
                    └──────┬──────┘
                           │
                           ▼
              ┌────────────────────────┐
              │  STEP S1 TO STEP S11   │
              └────────────┬───────────┘
                           │
                           ▼        ⌐S12
                      ╱─────────╲              NO
                     ╱  t(th) <   ╲──────────────────────┐
                     ╲  t(on)?    ╱                       │
                      ╲─────────╱                         │
                           │ YES                          │
                           ▼        ⌐S13                  ▼        ⌐S14
              ┌────────────────────────┐    ┌────────────────────────┐
              │    MOTOR TRAVELING     │    │      SWITCHED TO        │
              │   MODE IS MAINTAINED   │    │  ANOTHER TRAVELING MODE │
              └────────────┬───────────┘    └────────────┬───────────┘
                           │                             │
                           ▼        ⌐S21                 ▼        ⌐S25
         NO           ╱─────────╲              ╱─────────╲           NO
    ┌──────────────── │ IS START │              │ IS START │ ───────────┐
    │                 │ REQUEST  │              │ REQUEST  │            │
    │                 │ PRESENT? │              │ PRESENT? │            │
    │                  ╲───────╱                ╲───────╱ YES          │
    │                      │ YES                                       │
    │                      ▼        ⌐S22                               │
    │          ╱─────────────────────╲                                │
    │  NO     ╱  IS THERE RISK OF HIGH ╲                               │
    ├──────── │  TEMPERATURE PRESENT   │                               │
    │         ╲    WHEN STARTING?      ╱                               │
    │          ╲─────────────────────╱                                │
    │                      │ YES                                       │
    │                      ▼        ⌐S23                               │
    │          ┌────────────────────────┐                             │
    │          │      SWITCHED TO        │                             │
    │          │  ANOTHER TRAVELING MODE │                             │
    │          └────────────┬───────────┘                             │
    │                       │                                         │
    └───────────────────────┼─────────────────────────────────────┐  │
                            ▼        ⌐S24                          │  │
              ┌────────────────────────┐                          │  │
              │    CONTROL OF START     │                          │  │
              └────────────┬───────────┘                          │  │
                           │                                      │  │
                           ◄──────────────────────────────────────┴──┘
                           ▼
                    ┌─────────────┐
                    │     END     │
                    └─────────────┘
```

# FIG.8

```
         START

           │
           ▼  ┌─S1
┌──────────────────────────┐
│ VEHICLE INFORMATION      │
│ ACQUIRING PROCESS        │
└──────────────────────────┘
           │
           ▼  ┌─S2
┌──────────────────────────┐
│ LOAD WEIGHT              │
│ ACQUIRING PROCESS        │
└──────────────────────────┘
           │
           ▼  ┌─S3
┌──────────────────────────┐
│ GRADIENT ANGLE           │
│ ACQUIRING PROCESS        │
└──────────────────────────┘
           │
           ▼  ┌─S31
        ◇ IS IT            YES
        MOTOR TRAVELING ─────────────┐
        MODE? ◇                      │
           │ NO                      │
           ▼  ┌─S32                  │
┌──────────────────────────┐        │
│ REDUCED BALANCED DRIVING │        ▼
│ FORCE F CALCULATING      │  ┌──────────────┐
│ PROCESS                  │  │ STEP S4      │
└──────────────────────────┘  │ TO STEP S14  │
           │  ┌─S33           └──────────────┘
┌──────────────────────────┐
│ MOTOR TEMPERATURE Tm     │
│ LOWERING ESTIMATING      │
│ PROCESS                  │
└──────────────────────────┘
           │  ┌─S34
┌──────────────────────────┐
│ INVERTER TEMPERATURE Ti  │
│ LOWERING ESTIMATING      │
│ PROCESS                  │
└──────────────────────────┘
           │  ┌─S35
        ◇ $Tm \leqq TmR$ ? ◇  NO ────────┐
           │ YES                         │
           ▼  ┌─S36                      │
        ◇ $Ti \leqq TiR$ ? ◇  NO ────────┤
           │ YES                         │
           ▼  ┌─S37              ┌─S38   ▼
┌──────────────────┐   ┌──────────────────┐
│ RETURNED TO      │   │ ANOTHER TRAVELING│
│ MOTOR TRAVELING  │   │ MODE IS MAINTAINED│
│ MODE             │   └──────────────────┘
└──────────────────┘
           │
           ▼
         END
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015006854 A
- US 2014379186 A
- JP 2001304948 A